Europäisches Patentamt

(19) European Patent Office

Office européen des brevets

(11) Publication number: **0 279 082**
**B1**

(12) **EUROPEAN PATENT SPECIFICATION**

(45) Date of publication of the patent specification:
**18.10.89**

(21) Application number: **87200252.2**

(22) Date of filing: **18.02.87**

(51) Int. Cl.⁴: **B60D 1/00**

(54) **Draw hook device.**

(43) Date of publication of application:
**24.08.88 Bulletin 88/34**

(45) Publication of the grant of the patent:
**18.10.89 Bulletin 89/42**

(84) Designated Contracting States:
**BE DE FR GB IT NL SE**

(56) References cited:
**WO-A-84/03666**
**DE-A- 3 327 051**
**DE-C- 849 657**
**DE-U- 6 911 648**

(73) Proprietor: **Brink B.V., Industrieterrein 5, NL-7950 AA Staphorst(NL)**

(72) Inventor: **Brink, Gerard Jacobus, Graaf Lodewijklaan 9, NL-8064 AV Zwartsluis(NL)**

(74) Representative: **Kooy, Leendert Willem et al, OCTROOIBUREAU VRIESENDORP & GAADE P.O. Box 266, NL-2501 AW The Hague(NL)**

## Description

In recent years, Applicant and others have fabricated a towing bracket device, comprising a detachable towing bracket device, comprising a detachable towing bracket rod, provided with a ball coupling, and a retainer that can be fixedly secured to a towing vehicle, with which the retainer and the towing bracket rod can be interconnected by a manually operated coupling with a locking device, incorporating a safety device. In this known towing bracket device, the retainer has a movable locking pin having a handle, which pin cooperates with the underside of the towing bracket rod and is displaceable by the handle movable against a spring force out of cooperation with the towing bracket rod, while a safety mechanism is present, which blocks the locking pin in its locking position. In this known towing bracket device the towing bracket rod has a rectangular cross-section and the retainer has side walls adapted thereto, which side walls are connected, near the side facing the ball coupling, by a plate, supporting the bottom face of the towing bracket rod, and, at their top side, by a round pin, engaging in a recess in the top face of the towing bracket rod, while the movable locking pin is mounted between side walls, being secured onto a pivoting pin supported in the side walls of the retainer, one of the walls comprising a handle and the other wall being connected to the adjacent side wall of the retainer by means of a pulling spring, which locking pin cooperates self-breakingly with and is biased against the underside of the towing bracket rod, ending in a circularly arcuate profile at the free end, the distance between the vertical planes through the centre lines of the round pin and the pivoting pin being larger than the distance between the vertical planes through the centre line of the round pin and the centre of the circularly arcuate profile, whereas the angle, enclosed by the connecting lines of the contact point of the locking pin at the circularly arcuate profile to its centre and the centre line of the pivoting pin, is larger than 0° and smaller than 10°.

Although it functions properly and also meets the requirements of the "Rijksdienst voor het Wegverkeer" (The Netherlands State commission for Road-Traffic), this known towing bracket device has the drawback, that the construction is relatively complicated and expensive and that mounting and dismounting requires a certain skill and strength.

Furthermore it is not simply possible with this known towing bracket device to replace an existing one-piece towing bracket device by this known towing bracket device with detachable towing bracket rod.

This invention relates to a towing bracket device, comprising a detachable towing bracket rod, provided with a ball coupling, and a retainer and the towing bracket rod can be interconnected by a manually operated coupling with a locking device incorporation a safety device whereby the towing bracket rod and the retainer comprise axial helical thread parts that can cooperate with one another.

Such a towing bracket device is known from DE-C 849 657. With this known towing bracket device it is likely to occur, that when the towing bracket rod is screwed into the retainer sleeve, the rod is screwed too far inwardly, so that the rod is jammed in the sleeve and the locking bolt cannot be inserted in its hole. For loosening the bolt from the sleeve the use of a tool may be necessary. Furthermore, because the locking bolt is mounted in holes perpendicular to the longitudinal axis of the rod and the sleeve, the locking bolt is loaded with shearing forces, which could lead to a shearing of the bolt or at least to a certain play in the longitudinal direction of the rod, all the more since the bolt has as its secondary function to act as a relieving device for the screw thread connection. Moreover, the pitch angle of the screw thread on the rod and in the sleeve is greater than 10°, so that the screw thread does not perform a self-breaking action, that is to say, when a traction force is exerted on the rod, the rod tends to be screwed out of the sleeve, so that an additional load is exerted on the locking bolt.

The invention aims to remove the drawbacks of this known towing bracket device.

This object is attained, in that, according to the invention,

a) the towing bracket rod and the retainer are provided with stop surfaces which abut in the locked end position of the towing bracket rod,

b) either the towing bracket rod or the retainer incorporates an axially movable locking pin, which is biased towards a locked position in which the locking pin cooperates with the locking surface of a substantially semi-circular locking plate secured to and extending around the retainer or the towing bracket rod, such that in the locked position of the towing bracket rod the locking pin in its locked position engages the stop surface of the locking plate preventing further rotation of the towing bracket rod, and

c) the safety device consists of a safety catch, which is pivotably attached to the locking pin such that it can be used to manually retract the locking pin from its locked position, said safety catch being biased towards a locked position in which its free end engages behind and end surface of the towing bracket rod and in front of the locking surface of the locking plate in such a way as to clamp the locking pin in its locked position.

By applying these measures, the towing bracket device according to the invention obtains a simple and quite firm construction, whereas the detachable towing bracket rod can still be easily mounted and dismounted, since the towing bracket rod and the retainer are provided with stop surfaces, which abut in the locked end position of the towing bracket rod.

Furthermore the present towing bracket device meets the requirements of the "Rijksdienst voor het Wegverkeer", because the towing bracket device comprises a locking device, the locked end position of which coincides with that of the screw coupling between the towing bracket rod and the retainer and the locking device is secured by a safety lever, preventing, even if the bias on the locking pin in the direction of its locked end position would fall off, e.g. by the snapping of a tension spring, the locking pin from moving out of its locked position, because the safety catch in its locked position engages with its free end, in the direction of rotation of the towing bracket rod, behind the locking surface of the substantially semi-circular locking plate and, in axial direction, engages behind a stop surface.

In a preferred embodiment of the towing bracket device according to the invention

a) the towing bracket rod has a sleeve with internal helical thread and the retainer has external helical thread, which helical thread is trapezium thread,

b) the sleeve, in the extension of the helical thread part, has a cylindrical bore with a truncated conical bottom, constituting the one stop surface,

c) the retainer, in the extension of the helical thread part, has a cylindrical bore and at its free end a truncated conical end face, constituting the other stop surface, and

d) the locking pin at its free end has a locking surface, abutting, in the locked end position of the locking pin, the locking surface on the substantially semi-circular locking plate, in which the locking surfaces enclose a sharp angle $\alpha$ with the longitudinal centre line of the towing bracket rod and the retainer, said angle being larger than 0° and smaller than 10°.

In this embodiment of the towing bracket device according to the invention, the towing bracket rod and the retainer are properly axially centered with respect to each other, and by means of the trapezium thread a very high pulling force can be transferred between the retainer and the towing bracket rod, so that the present towing bracket device is suitable for heavy trailers and the clearance in the coupling between the towing bracket rod and the retainer arising after long-term use is removed by the sharp angle $\alpha$ between the locking surfaces on the locking plate and the locking pin. Since this angle $\alpha$ is larger than 0° and smaller than 10°, it performs a self-breaking action, i.e. that the locking pin cannot be pushed back by exerting a torque on the towing bracket rod.

In a particularly efficient embodiment of the towing bracket device according to the invention

a) the trapezium thread has double threads with a pitch angle of ± 6° and

b) the locking surfaces enclose an angle $\alpha$ of 7° with the longitudinal centre line of the towing bracket rod and the retainer.

In this embodiment of the present towing bracket device, the coupling between the towing bracket rod and the retainer can be established and interrupted by a short turn, while the pitch angle of the trapezium thread itself also exerts a self-breaking action, ensuring that when a pulling force is exerted on the towing blacked rod if will not turn of rotate. On account of the angle $\alpha$ of 7° between the locking surfaces and the longitudinal centre line of the retainer and the towing bracket rod, an optimum self-breaking action may be performed among the locking surfaces themselves, ensuring that the locking pin cannot be pushed back by exerting a torque on the towing bracket rod, action between the locking pin and the locking plate can be easily manually removed.

The invention will be further elucidated with an embodiment on the basis of the drawing.

Fig. 1 is a partial top view and partial longitudinal section of the towing bracket device according to the invention,

Fig. 2 is a side view of the towing bracket device according to the invention and

Fig. 3 is a section along the line III–III in fig. 2.

The towing bracket device according to the invention comprises a detachable towing bracket rod 1 and a retainer 2. The towing bracket rod 1 has at its one end a perpendicularly bent part 3 with a ball coupling part 4 and a cylindrical sleeve 6 is mounted to the free end of the round rod portion 5, said sleeve having a round opening 7 on the side of the the rod portion 5, fitting onto the rod portion 5. The sleeve 6 is secured by a welding seam 8 onto the rod portion 5. Between the far end of the rod portion 5 and the bore 7, a welding seam 8` may have been applied in the sleeve. It is also possible that the rod portion 5 is secured to the sleeve 6 in a different manner, e.g. by means of helical thread.

The rod portion 5 can also have a cross-section other than round, in which the bore 7 is than adapted to the cross-section of the rod portion 5.

The sleeve 6 is provided at its end facing away from the rod portion 5 with a bore 9 with internal helical thread 10, which preferably comprises double-threaded, right-handed, trapezium helical thread with a pitch angle of ± 6°, a tooth depth of 5 mm, a top angle of 30° and pitch of 20 mm.

A cylindrical bore 11 with a smaller diameter is connected to the bore 9 with helical thread 10, said bore 11 having a truncated conical bottom 12, constituting a stop cam, as well be further explained hereafter and which can connect to the bore 7 for the rod portion 5.

On the retainer 2, which may comprise a round rod portion 13, the cross-section of which may correspond to that of the rod portion 5, of the towing bracket device according to the invention, a cylindrical sleeve 14 is mounted, e.g. with the aid of welding seams 15 and 16. The sleeve 14 comprises external helical thread 17 of the same construction as the internal helical thread 10 in the sleeve 6.

The sleeve 14 has, at the end facing the towing bracket rod 1, a cylindrical part 18 and at its free end a truncated conical end face 19. The cylindrical part 18 closely fits into the cylindrical bore 11 in the sleeve 6 and the end face 19 has the same conical vortex angle as the truncated conical bottom 12 of the cylindrical bore 11 in the sleeve 6.

The sleeve 14 has a cylindrical bore 20, fitting onto the round rod portion 13. In this embodiment, the rod portions 5 and 13 can have the same diameter, as well as the bores 7 and 20.

A substantially semi-circular locking plate 22 is mounted onto the cylindrical sleeve 14, in a plane perpendicular to the longitudinal centre line 21 of the rod portions 5 and 13, e.g. with a welding seam 23. The locking plate 22 is located on the sleeve 14 on the side of the helical thread 17 facing away from the sleeve 6 and close to that far end of said helical thread. The function and shape of the locking plate 22 will be further elucidated hereafter.

The rod portion 13 and the sleeve 14 with the helical thread 17 can also be made of one piece. The embodiment according to the drawings, however, has the enormous advantage that every existing one-piece towing bracket device can easily be fitted with a detachable towing bracket rod, viz. by simply sawing it through and mounting the sleeves 6 and 14 onto it, etc.

A bearing sleeve 24 is mounted on the rod portion 5 at the exterior of the coupling sleeve 6, the centre line 25 of the sleeve 24 being parallel to the longitudinal centre line 21 of the towing bracket device. The bearing sleeve 24 has a U-shaped cross-section, the legs of the U being secured to the periphery of the the coupling sleeve 6 by welding seams 25. The bearing sleeve 24 can also have a different shape, e.g. a round one, and be secured in a different manner, e.g. by brackets.

The bearing sleeve 24 has a bore 26 in the shape of a part of a cylinder, in which a locking pin 27 is mounted slidable in longitudinal direction. The locking pin 27 has a narrower section 28, to which a compression spring 29 is mounted in the bearing sleeve 24, said spring being confined between a shoulder 30 at the locking pin 27 and a shoulder 31 in the bearing sleeve 24, which shoulder 31 can be an end face of a sleeve 32 secured in the bearing sleeve 24.

In the locking pin 27 there is a radial bore 33 in which a pin 34 is fixed, the free protruding end of which is slidably guided in a slot 35 in the bearing sleeve 24, which extends parallel to the locking pin 27.

The locking pin 27 has at its end facing away from the rod portion 5 a locking surface 36 enclosing a sharp angle α with the longitudinal centre line 21 of the towing bracket rod 1 and the retainer 2, which angle α is larger than 0° and smaller than 10° and preferably is 7°, as elucidated hereabove.

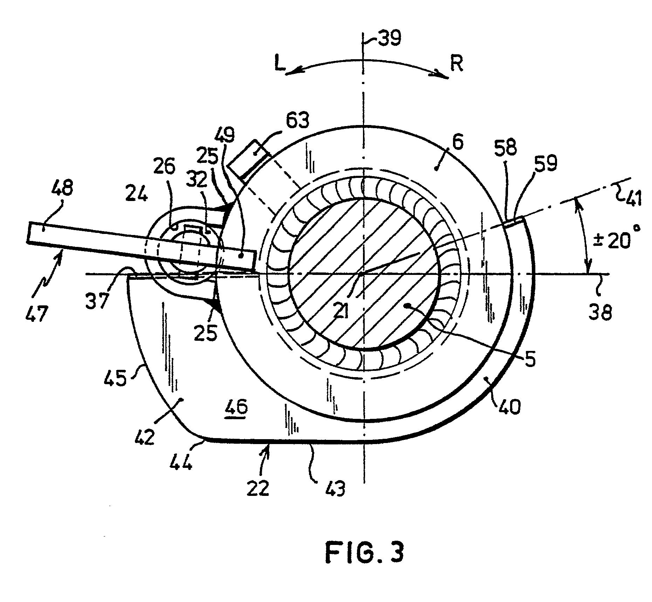

The locking plate 22 as substantially semi-circular, extending over an angle of about 200° and has (at the left-hand side in fig. 3) a locking surface 37, enclosing the same angle α with the longitudinal centre line 21 as the locking surface 36 at the locking pin 27, and closely abutting the locking surface 36 of the locking pin 27 in the locked end position of the locking pin 27.

The shape and the position of the locking plate 22 will be further elucidated hereafter, particularly on the basis of fig. 3. Centre lines 38 and 39 are in the horizontal and vertical middle plane respectively, of the rod portions 13 and 5 of the retainer 2 or the towing bracket rod 1, respectively. The first portion 40 of the locking plate 22, observed in the direction of rotation R, has a constant width of about 5 mm and extends over an angle of 110° between a line 41, enclosing an angle of ± 20° with the horizontal centre line 38, and the vertical centre line 39. The second portion 42 of the locking plate 22 has, in the direction of rotation R over an angle of ± 45°, a gradually increasing width and is bounded by a straight peripheral face part 43, being substantially perpendicular to the centre line 39. Via a rounding off 44 a substantially concentric peripheral face part 43 blends with the peripheral face part 43, ending at the level of the horizontal centre line 38, where the radial locking surface 37 is formed on the locking plate 22. Furthermore the locking plate 22 has a stop surface 46 on the side visible in fig. 3, extending over its entire length. The function and working of the locking plate 22 and parts thereof will be elucidated hereafter.

The locking pin 27 is furthermore provided with a safety device. According to the invention, the safety device comprises a safety catch 47 with two arms 48 and 49, which catch between the arms 47 and 48 is mounted with a bore onto a pivoting pin 50, being diametrially mounted in a fork 51 at the narrower portion 28 of the locking pin 27. The arm 48 of the catch 47 is shaped as a handle, the purpose of which will be explained hereafter.

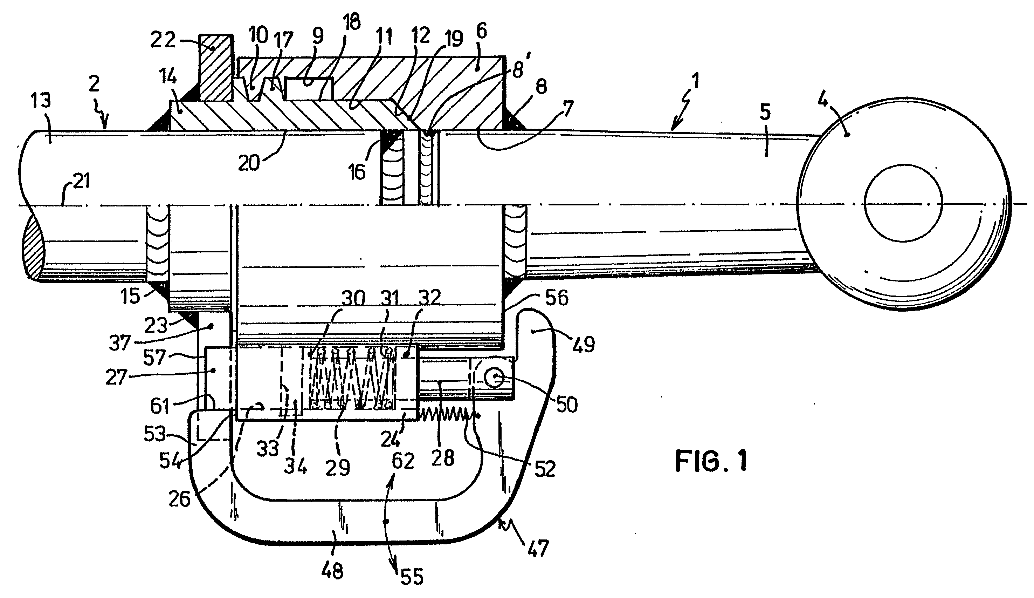

The safety catch 47 is biased into the locked position according to fig. 1 by means of a compression spring 52 between the arm 48 and the bearing sleeve 24. In this embodiment, the free end 53 of the arm 48 engages, in the direction of rotation R of the towing bracket rod 1 (see figure 3) behind the locking surface 37 of the locking plate and in axial direction behind a stop surface 54 at the bearing sleeve 24 of the locking pin 27, which stap surface preferably is the end face of the bearing sleeve 24.

The other arm 49 of the safety catch 47 is able to cooperate with the end face 56 of the threaded coupling sleeve 6 at the side of the ball coupling 4, when the catch 47 rotates in the direction of the arrow 55.

Mounting and dismounting of the towing bracket device according to the invention is performed as follows, see fig. 3, assuming that the retainer 2 with the rod portion 13, the sleeve 14 and the locking plate 22 is mounted to the towing vehicle in the position drawn in fig. 3.

The towing bracket rod 1 is, with the locking pin 27 in the position in the direction of rotation L, placed just past the line 41 and with the sleeve 6 opposite the sleeve 14 at the retainer 2 and axially pressed towards the retainer 2, the cylindrical part 18 of the sleeve engaging with its free end into the bore 11 in the sleeve 6 and is thus centered. Now the towing bracket rod 1 is turned in the direction R, the helical thread 10 in the sleeve 6 engaging into the helical thread 17 on the sleeve 14 and the locking pin 27 abutting, with part of its end face 57, the stop surface 46 of the locking plate 22. Here it is assumed that the locking pin only abuts the stop surface 46 with its end face 58 when the helical thread 10 and the helical thread 17 are already in engagement. If the locking pin 27 were to protrude somewhat too far forwards and to end up on the radial face 58 of the locking plate during rotation of the towing bracket rod 1, the abutment of the head face 57 of the locking pin 27 against the stop face 46 can be facilitated by a slight bevel or rounding off 59 on the locking plate 22 and/or a slight bevel or rounding off 60 on the locking pin 27.

When the head face 57 of the locking pin 27 abuts the stop surface 46 of the locking plate 22, the towing bracket rod can be turned further in the direction R axially pushing back the locking pin 27 by the stop surface 46 by screwing on the helical thread 10 onto the helical thread 17.

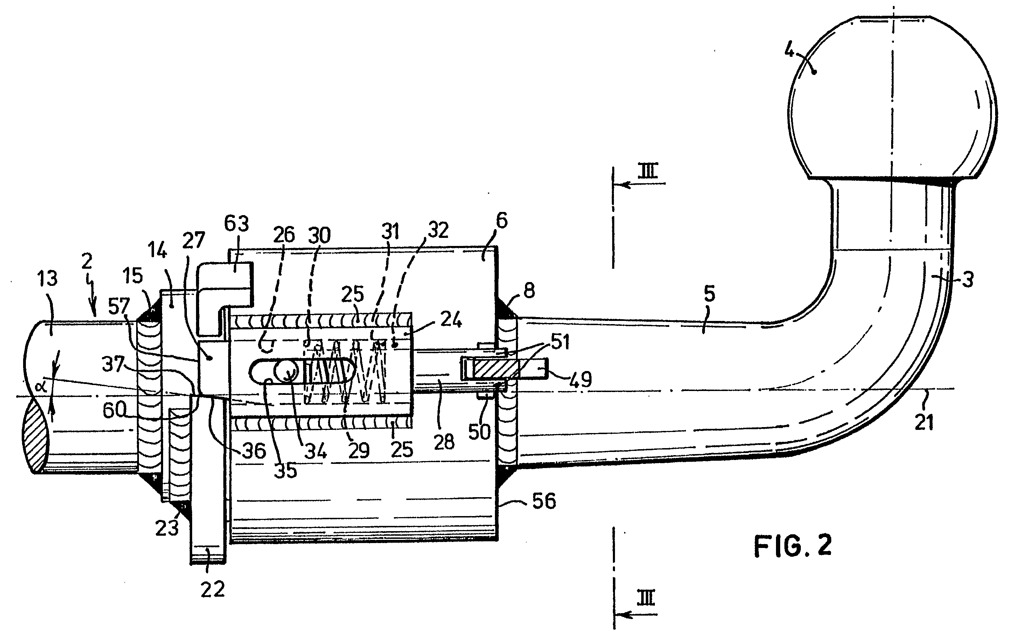

When the locking pin 27 has passed the vertical centre line 39 in the direction of rotation R, the end face 61 of the end part 53 of the arm 48 of the safety catch 47 contacts the straight peripheral face portion 43 of the locking plate 22, opening the safety lever in the direction of the arrow 55 (fig. 2). When further turning the towing bracket rod 1 in the direction R the arm 49 of the catch 47 engages the end face 56 of the sleeve 6, retracting the locking pin 27, also by means of the safety catch 47, from its locked position.

Subsequently the end face 61 of the safety catch 47 passes the rounding off 44 on the peripheral face of the locking plate 22 and runs onto the substantially, concentrical peripheral part 45, until the locking face 37 of the locking plate 22 has been passed, the spring 52 pulling the safety catch 47 inwards in the direction of the arrow 62 (fig. 1), establishing the above-described safety position of the locking pin 27.

After a slight turn onwards in the direction of the arrow R of the towing bracket rod 1 the locking surface 36 of the locking pin 27 passes the locking surface 37 of the locking plate 22 and the spring 29 pashes the locking pin 27 out of the bearing sleeve 24, the locking surfaces 36 and 37 ending up one on top of the other. In this locked end position of the locking pin 27, the truncated conical stop surfaces 12 and 19 in the sleeve 6 and on the sleeve 14 respectively, abut against each other.

Clearance possibly arising in due course in the thread coupling between the towing bracket rod 1 and the retainer 2 can be removed by the locking pin 27, sliding with its locking face further onto the locking face 37 of the locking plate 22.

In order to prevent the towing bracket rod 1 from being placed in the wrong position onto the retainer 2, a square-headed brace 63 can be welded onto the sleeve 14 (see figures 2 and 3), positioned in the direction of rotation L at about an angular distance of 45° from the vertical centre line 39.

In order to dismount the towing bracket rod 1, one only has to turn the arm 48, constructed as a handle, with one hand in the direction of the arrow 55, cancelling the safety position of the locking pin 27 and axially retracting the locking pin 27 by the lever action of the arm 49 against the end face 56 of the coupling sleeve 6 and removing the locking of the coupling sleeve 6. After that, by a light blow of the hand against the ball coupling 4 in the direction of the arrow L, the towing bracket rod 1 can be released and in the direction of the arrow L easily be turned loose and removed.

**Claims**

1. Towing bracket device, comprising a detachable towing bracket rod (1), provided with a ball coupling (4) and a retainer (2) that can be fixedly secured to a towing vehicle, with which the retainer and the towing bracket rod can be interconnected by a manually operated coupling with a locking device (22, 27) incorporating a safety device (47) whereby the towing bracket rod (1) and the retainer (2) comprise axial helical thread parts (10, 17) that can cooperate with one another, characterized in that

a) the towing bracket rod (1) and the retainer (2) are provided with stop surfaces (12, 19) which abut in the locked end position of the towing bracket rod (1),

b) either the towing bracket rod (1) or the retainer (2) incorporates an axially movable locking pin (27), which is biased towards a locked position in which the locking pin (27) cooperates with the locking surface (37) of a substantially semi-circular locking plate (22) secured to and extending around the retainer (2) or the towing bracket rod (1), such that in the locked position of the towing bracket rod (1) the locking pin (27) in its locked position engages the stop surface (37) of the locking plate (22) preventing further rotation of the towing bracket rod (1), and

c) the safety device consists of a safety catch (47) which is pivotably attached to the locking pin (27) such that it can be used to manually retract the locking pin (27) being biased towards a locked position in which its free end (53) engages behind an end surface (54) of the towing bracket rod (1) and in front of the locking surface (37) of the locking plate (22) in such a way as to clamp the locking pin (27) in its locked position.

2. Towing bracket device according to claim 1, characterized in that

a) the towing bracket rod (1) has a sleeve (6) with internal helical thread (10) and the retainer (2) has external helical thread (17), which helical thread (10, 17) is a trapezium thread,

b) the sleeve (6), in the extension of the helical thread part (10), has a cylindrical bore (11) with a truncated conical bottom (12), constituting the one stop surface,

c) the retainer (2), in the extension of the helical thread part (17), has a cylindrical bore (11) and at its free end a truncated conical end face (19), constituting the other stop surface and

d) the locking pin (27) at its free end has a locking surface (36), abutting, in the locked end position of the locking pin, the locking surface (37) on the substantially semi-circular locking plate (22), in which the locking surfaces (36, 37) enclose an acute angle α with the longitudinal centre line of the towing bracket rod (1) and the retainer (2), said angle being larger than 0° and smaller than 10°.

3. Towing bracket device according to claim 2, characterized in that the trapezium thread (10, 17) has double threads with a pitch angle of ± 6° and that the locking surfaces (36, 37) enclose an angle α of 7° with the longitudinal centre line (21) of the towing bracket rod (1) and the retainer (2).

4. Towing bracket device according to claim 2 or 3, characterized in that the cylindrical part (18) of the retainer (2) has such a length that it is centered in the cylindrical bore (11) in the sleeve (6) on the towing bracket rod (1), before the helical thread parts (10, 27) engage each other.

5. Towing bracket device according to one or more of the preceding claims, characterized in that

a) the substantially semi-circular locking plate (22) has a peripheral face (43, 44), the radial distance of which to the longitudinal centre line (21) of the towing bracket rod (1) being larger, over at least a part of its length up to the locking surface (37) of the locking plate (22), than the radial distance between the end face (61) of the safety catch (47) at its active end portion (53) and the longitudinal centre line (21) of the towing bracket rod (1) and the retainer (2) in the locked end position of the safety catch (47) and the locking pin (27) and

b) the radial distance of said peripheral face (43, 44) of the locking plate (22) to the longitudinal centre line (21) gradually increases from a value, which is smaller than or equal to the latter radial distance.

6. Towing bracket device according to one or more of the claims 1 through 5, characterized in that the safety catch is a dual-armed lever (47), its one arm (48) being a safety arm, arranged as a handle and being connected by a pulling spring (52) to the helical thread sleeve (6), in such a manner that the safety catch (47) is pulled towards its active position and its other arm (49) being able to cooperate with a radial face (56) of the sleeve (6) on the towing bracket rod (1), in such a manner that the locking pin (27) can be entirely retracted from its active position with the aid of the safety catch (47), the free end of the other arm (49) abutting the radial face (56) on the sleeve (6).

7. Towing bracket device according to one or more of the preceding claims, characterized in that

a) the locking pin (27) is slidably mounted in a bearing sleeve (24) which is attached to the helical thread sleeve (6) on the towing bracket rod (1),

b) a helical compression spring (6) is mounted on the locking pin (27), said locking pin being located between a shoulder (30) at the locking pin (27) and a shoulder (31) in the bore (26) of the bearing sleeve (24) and

c) a pin (34) is secured in a radial bore (33) of the locking pin (27), the free protruding end of the pin (34) is slidably guided in a slot (35) in the bearing sleeve (24), which extends parallel to the locking pin (27).

8. Towing bracket device according to any of the preceding claims, characterized in that

a) the retainer (2) consists of a rod portion (13), the cross-section of which corresponds to that of the rod portion (5) of the towing bracket rod (1),

b) a sleeve (14) is secured onto the rod portion (13), provided with the external helical thread part (17) and a cylindrical part (18) and

c) the substantially semi-circular locking plate (22) is secured onto the sleeve (14) on the side of the external helical thread part (17), which faces away from the towing rod portion (5).

**Revendications**

1. Dispositif d'attelage comportant une tige d'attelage détachable (1), comprenant une rotule d'accouplement (4) et une attache (2) qui peut être fixement accrochée à un véhicule romorqueur, dispositif avec lequel l'attache et la tige d'attelage peuvent être interconnectées par un accouplement manœuvré manuellement et présentant un dispositif de verrouillage (22, 27) incorporant un dispositif de sécurité (47), étant précisé que la tige d'attelage (1) et l'attache (2) présentent des parties (10, 17) à filet hélicoïdal axial qui peuvent coopérer l'une avec l'autre, caractérisé en ce que

a) la tige d'attelage (1) et l'attache (2) présentent des surfaces de butée (12, 19) qui, dans la position finale verrouillée de la tige d'attelage (1), viennent en butée,

b) soit la tige d'attelage (1) soit l'attache (2) comprend une broche de verrouillage (27) qui est mobile axialement et qui est contrainte en direction d'une position verrouillée dans laquelle la broche de verrouillage (27) coopère avec la surface de verrouillage (37) d'une plaque de verrouillage (22) sensiblement semi-circulaire, fixée à l'attache (2) ou à la tige d'attelage (1) et s'étendant autour de cette attache ou de cette tige d'attelage, de façon telle que, dans la position verrouillée de la tige d'attelage (1), la broche de verrouillage (27), dans sa position verrouillée, vient en prise avec la surface de butée (37) de la plaque de verrouillage (22), empêchant la tige d'attelage (1) de continuer à tourner, et

c) le dispositif de sécurité est constitué d'un loquet de sécurité (47) qui est monté à pivotement sur la broche de verrouillage (27) de façon à pouvoir servir pour dégager manuellement la broche de verrouillage (27) de sa position verrouillée, ledit loquet de sécurité (47) étant contraint en direction d'une position verrouillée dans laquelle son extrémité (53) vient en prise dernière une surface d'extrémité (53) de la tige d'attelage (1) et en avant de la surface de verrouillage (37) de la plaque de verrouillage (22) de façon à bloquer la broche de verrouillage (27) dans sa position verrouillée.

2. Dispositif d'attelage selon la revendication 1, caractérisé en ce que

a) la tige d'attelage (1) comporte un fourreau (6) à filet hélicoïdal intérieur (10) et l'attache (2) présente un filet hélicoïdal extérieur (17), ce filet hélicoïdal (10, 17) étant un filet trapézoïdal,

b) le fourreau (6), dans le prolongement de la partie (10) à filet hélicoïdal, présenté un alésage cylindrique (11) à fond tronconique (12), qui constitue la première face de butée,

c) l'attache (2), dans le prolongement de la partie (17) à filet hélicoïdal, présente un alésage cylindrique (11) et, à son extrémité libre, une face d'extrémité tronconique (19), qui constitue l'autre face de butée et

d) la broche de verrouillage (27), à son extrémité libre, présente une surface de verrouillage (36) qui, dans la position finale verrouillée de la broche de verrouillage, vient buter contre la surface de verrouillage (37) de la plaque de verrouillage (22) sensiblement semi-circulaire, les surfaces de verrouillage (36, 37) faisant un angle aigu α avec l'axe longitudinal de la tige d'attelage (1) et de l'attache (2), ledit angle étant supérieur à 10°C.

3. Dispositif d'attelage selon la revendication 2, caractérisé en ce que le filet trapézoïdal (10, 17) présente un double filet avec un angle d'hélice de ± 6°; et en ce que les surfaces de verrouillage (36, 37) font un angle α de 7° avec l'axe longitudinal (21) de la tige d'attelage (1) et de l'attache (2).

4. Dispositif d'attelage selon la revendication 2 ou 3, caractérisé en ce que la partie cylindrique (18) de l'attache (2) a une longueur telle qu'elle se centre dans l'alézage cylindrique (11) du fourreau (6) de la tige d'attelage (1) avant que les parties (10, 27) à filet hélicoïdal ne se vissent l'une dans l'autre.

5. Dispositif d'attelage selon une ou plusieurs des revendications précédentes, caractérisé en ce que

a) la plaque de verrouillage (22) sensiblement semi-circulaire présente une face périphérique (43, 44) dont, sur au moins une partie de sa longueur en allant jusqu'à la surface de verrouillage (37) de la plaque de verrouillage (22), la distance radiale à l'axe longitudinal (21) de la tige d'attelage (1) est supérieure à la distance radicale entre la face d'extrémité (61) du loquet de sécurité (47) à sa portion d'extrémité active (53) et l'axe longitudinal (21) de la tige d'attelage (1) et de l'attache (2) dans la position finale verrouillée du loquet de sécurité (47) et de la broche de verrouillage (27) et

b) la distance radiale entre ladite face périphérique (43, 44) de la plaque de verrouillage (22) et l'axe longitudinal (21) augmente graduellement à partir d'une valeur inférieure ou égale à cette dernière distance radiale.

6. Dispositif d'attelage selon une ou plusieurs des revendications 1 à 5, caractérisé en ce que le loquet de sécurité est un levier (47) à double bras, son premier bras (48) étant un bras de sécurité conçu comme une poignée et relié, par un ressort de traction (52), au fourreau (6) à filet hélicoïdal de façon telle que le loquet de sécurité (47) soit tiré en direction de sa position active; et son autre bras (49) pouvant coopérer avec une face radiale (56) du fourreau (6) de la tige d'attelage (1) de façon telle que la broche de verrouillage (27) puisse être entièrement dégagée de sa position active à l'aide du loquet de sécurité (47), l'extrémité libre de l'autre bras (49) butant contre la face radiale (56) du fourreau (6).

7. Dispositif d'attelage selon une ou plusieurs des revendications précédentes, caractérisé en ce que

a) la broche de verrouillage (27) est montée. avec liberté de coulissement, dans un fourreau porteur (24) fixé au fourreau (6) à filet hélicoïdal de la tige d'attelage (1),

b) un ressort hélicoïdal (6) de compression est monté sur la broche de verrouillage (27), ledit ressort étant placé entre un épaulement (30) de la broche de verrouillage (27), et un épaulement (31) prévu dans l'alésage (26) du fourreau porteur (24) et

c) une goupille (34) est fixée dans un perçage radial (33) de la broche de verrouillage (27), l'extrémité libre saillante de la goupille (34) étant guidée, avec liberté de coulissement, dans une fente (35) prévue dans le fourreau porteur (24) et s'étendant parallèlement à la broche de verrouillage (27).

8. Dispositif d'attelage selon l'une quelconque des revendications précédentes, caractérisé en ce que

a) l'attache (2) est constituée d'une portion de tige (13) dont la section droite correspond à celle de la portion de tige (5) de la tige d'attelage (1),

b) un fourreau (14) est fixé sur la portion de tige (13) et présente une partie (17) à filet hélicoïdal extérieur et une partie cylindrique (18) et

c) la plaque de verrouillage (22) sensiblement semi-circulaire est fixée sur le fourreau (14), du côté de la partie (17) à filet hélicoïdal extérieur opposée à la portion (5) de la tige d'attelage.

**Patentansprüche**

1. Anhängevorrichtung, umfassend eine abnehmbare Anhängestange (1), die mit einer Kugelkopfkupplung (4) versehen ist, und eine Halterung (2), die an einem Zugfahrzeug starr befestigt werden kann, bei der die Halterung und die Anhängestange durch eine manuell betätigbare Kupplung mit einer eine Sicherheitseinrichtung (47) aufweisenden Sperreinrichtung (22, 27) miteinander verbindbar sind, wobei die Anhängestange (1) und die Halterung (2) axiale Gewindebereiche (10, 17) aufweisen, die zusammenwirken können, dadurch gekennzeichnet,

(a) daß die Anhängestange (1) und die Halterung (2) mit Anschlagflächen (12, 19) versehen sind, die in der verriegelten Endstellung der Anhängestange (1) aneinanderliegen,

(b) daß entweder die Anhängestange (1) oder die Halterung (2) einen axial beweglichen Sperrstift (27) enthält, der in eine Sperrstellung federbelastet ist, in der der Sperrstift (27) mit der Sperrfläche (37) einer im wesentlichen halbkreisförmigen Sperrplatte (22) zusammenwirkt, die an der Halterung (2) oder an der Anhängestange (1) befestigt ist und sich um diese herum erstreckt, so daß in der verriegelten Stellung der Anhängestange (1) der Sperrstift (27) in seiner Sperrstellung an der Sperrfläche (37) der Sperrplatte (22) anliegt und eine weitere Verdrehung der Anhängestange (1) verhindert, und

(c) daß die Sicherheitseinrichtung aus einer Sicherheitsklinke (47) besteht, die an dem Sperrstift (27) schwenkbar befestigt ist, so daß sie verwendbar ist, um den Sperrstift (27) mit der Hand aus seiner Sperrstellung zurückzuziehen, wobei die Sicherheitsklinke (47) in eine Sperrstellung federbelaster ist, in der ihr freies Ende (53) hinter einer Endfläche (54) der Anhängestange (1) und vor der Sperrfläche (37) der Sperrplatte (22) derart eingreift, um den Sperrstift (27) in seiner Sperrstellung einzuklemmen.

2. Anhängevorrichtung nach Anspruch 1, dadurch gekennzeichnet,

(a) daß die Anhängestange (1) eine Hülse (6) mit einem Innengewinde (10) aufweist und die Halterung (2) ein Außengewinde (17) aufweist, wobei die Gewinde (10, 17) Trapezgewinde sind,

(b) daß die Hülse (6) in der Verlängerung des Gewindebereichs (10) eine zylindrische Bohrung (11) mit einem die eine Anschlagfläche bildenden kegelstumpfförmigen Grund hat,

(c) daß die Halterung (2) in der Verlängerung des Gewindebereichs (17) einen zylindrischen Bereich (18) und an dessen freiem Ende eine die andere Anschlagfläche bildende kegelstumpfförmige Endfläche (19) hat, und

(d) daß der Sperrstift (27) an seinem freien Ende eine Sperrfläche (36) hat, die in der gesperrten Endlage des Sperrstiftes an der Sperrfläche (37) der wesentlichen halbkreisförmigen Sperrplatte (22) anliegt, wobei die Sperrflächen (36, 37) mit der Längsachse der Anhängestange (1) und der Halterung (2) einen spitzen Winkel α einschließen, der größer als 0° und kleiner als 10° ist.

3. Anhängevorrichtung nach Anspruch 2, dadurch gekennzeichnet, daß das Trapezgewinde (10, 17) zwei Gänge mit einem Steigungswinkel von ± 6° hat, und daß die Sperrflächen (36, 37) mit der Längsachse (21) der Anhängestange (1) und der Halterung (2) einen Winkel α von 7° einschließen.

4. Anhängevorrichtung nach Anspruch 2 oder 3, dadurch gekennzeichnet, daß der zylindrische Bereich (18) der Halterung (2) eine solche Länge hat, daß er sich in der Mitte der zylindrischen Bohrung (11) der Hülse (6) der Anhängestange (1) befindet, bevor die Gewindebereiche (10, 17) miteinander in Eingriff gelangen.

5. Anhängevorrichtung nach einem oder mehreren der vorhergehenden Ansprüche, dadurch gekennzeichnet,

(a) daß die im wesentlichen halbkreisförmige Sperrplatte (22) eine Umfangsfläche (43, 44) hat, die zumindest über einen Teil ihrer Länge bis zu der Sperrfläche (37) der Sperrplatte (22) von der Längsachse (21) der Anhängestange (1) einen radialen Abstand hat, der größer ist als der radiale Abstand zwischen der Endfläche (61) der Sicherheitsklinke (47) an deren wirksamen Endbedreich (53) und der Längsachse (21) der Anhängestange (1) und der Halterung (2) in der gesperrten Endlage der Sicherheitsklinke (47) und des Sperrstiftes (27), und

(b) daß der radiale Abstand der Umfangsfläche (43, 44) der Sperrplatte (22) von der Längsachse (21) von einem Wert zunimmt, der kleiner oder gleich dem letztgenannten radialen Abstand ist.

6. Anhängevorrichtung nach einem oder mehreren der Ansprüche 1 bis 5, dadurch gekennzeichnet, daß die Sicherheitsklinke ein zweiarmiger Hebel (47) ist, deren einer Arm (48) ein Sicherheitsarm ist, der als Handgriff ausgebildet und durch eine Zugfeder (52) mit der Gewindehülse (6) derartig verbunden ist, daß die Sperrklinke (47) in ihre wirksame Stellung gezogen wird, und dessen anderer Arm (49) mit einer Radialfläche (56) der Hülse (6) auf der Anhängestange (1) derart zusammenwirken kann, daß der Sperrstift (27) mit Hilfe der Sicherheitsklinke (47) aus seiner wirksamen Stellung vollständig zurückgezogen werden kann, wobei das freie Ende des anderen Arms (49) an der Radialfläche (56) der Hülse (6) anliegt.

7. Anhängevorrichtung nach einem oder mehreren der vorhergehenden Ansprüche, dadurch gekennzeichnet,

(a) daß der Sperrstift (27) in einer Lagerhülse (24) verschiebbar gelagert ist, die an der Gewindehülse (6) auf der Anhängestange (1) befestigt ist,

(b) daß eine Schraubendruckfeder (29) auf dem Sperrstift (27) angeordnet ist, wobei sich diese Druckfeder an einer Schulter (30) des Sperrstiftes (27) und einer Schulter (31) der Bohrung (26) der Lagerhülse (24) abstützt, und

(c) daß ein Stift (34) in einer Radialbohrung (33) des Sperrstiftes (27) befestigt ist, wobei das freie vorspringende Ende des Stiftes (34) in einem sich parallel zu dem Sperrstift (27) erstreckenden Schlitz (35) der Lagerhülse (24) verschiebbar geführt ist.

8. Anhängevorrichtung nach einem der vorhergehenden Ansprüchen, dadurch gekennzeichnet,

(a) daß die Halterung (2) aus einem Stangenbereich (13) besteht, dessen Querschnitt demjenigen des Stangenbereichs (5) der Anhängestange (1) entspricht,

(b) daß eine Hülse (14) auf dem Stangenbereich (13) befestigt ist, die mit einem Außengewinde (17) und einem zylindrischen Bereich (18) versehen ist, und

(c) daß die im wesentlichen halbkreisförmige Sperrplatte (22) an der von dem Zugstangenbereich (5) abgekehrten Seite des Außengewindebereichs (17) befestigt ist.

**FIG. 1**

EP 0 279 082 B1

FIG. 2

EP 0 279 082 B1

FIG. 3